# EUROPÄISCHE PATENTSCHRIFT

(11) **EP 2 190 295 B1**
(45) Veröffentlichungstag und Bekanntmachung des Hinweises auf die Patenterteilung: **03.08.2016**
(21) Anmeldenummer: 08801665.4
(22) Anmeldetag: 21.08.2008
(51) Int. Cl.: A21B 3/04, F24C 15/32, F24C 14/00, A47L 15/44

(54) **HAUSHALTSGERÄT MIT EINEM DURCH EINE TÜR VERSCHLIESSBAREN BEHANDLUNGSRAUM UND MIT EINER EINFÜLLVORRICHTUNG**
DOMESTIC APPLIANCE COMPRISING A TREATMENT CHAMBER THAT CAN BE CLOSED BY A DOOR AND A FILLING DEVICE
APPAREIL MÉNAGÉ MUNI D'UNE CHAMBRE DE TRAITEMENT, POUVANT ÊTRE FERMÉE AU MOYEN D'UNE PORTE, ET D'UN DISPOSITIF DE REMPLISSAGE

(30) Priorität: 24.08.2007 DE 102007040310
(43) Veröffentlichungstag der Anmeldung: 02.06.2010
(73) Patentinhaber: Miele & Cie. KG, 33332 Gütersloh (DE)
(72) Erfinder: BECKER, Torben, 33613 Bielefeld (DE); NORDEMANN, Rudolf, 33442 Herzebrock-Clarholz (DE); RENDER, Joachim, 48231 Warendorf (DE)
(86) Internationale Anmeldenummer: PCT/EP2008/006891
(87) Internationale Veröffentlichungsnummer: WO 2009/027052

(56) Entgegenhaltungen:
- EP-A1- 1 655 542
- EP-A1- 1 724 529
- EP-A1- 1 770 198
- DE-A1- 19 908 181
- JP-A- 2005 155 998
- US-A- 6 065 171

## Beschreibung

Die Erfindung betrifft ein Haushaltsgerät mit einem durch eine Tür verschließbaren Behandlungsraum und mit einer Einfüllvorrichtung der im Oberbegriff des Anspruchs 1 genannten Art.

Ein derartiges Haushaltsgerät ist beispielsweise aus der EP 1 628 079 B1 bekannt. Das bekannte Haushaltsgerät ist hier als ein Dampfgarofen ausgebildet, bei dem überhitzter Dampf verwendet wird. Der hieraus bekannte Dampfgarofen weist einen durch eine Tür verschließbaren Behandlungsraum auf und ist mit einer Einfüllvorrichtung zum Einfüllen einer Betriebsflüssigkeit, hier Wasser, ausgestattet. In einer Betriebsart des bekannten Dampfgarofens wird das über die Einfüllvorrichtung in den Dampfgarofen eingeleitete Wasser, behandelt in den Behandlungsraum eingebracht. Die Wasserbehandlung erfolgt hier durch einen Dampferzeuger, mit dem das Wasser zu überhitztem Dampf umgewandelt wird, der dann in den als Garraum ausgebildeten Behandlungsraum eingeleitet wird. Die durch die Tür verschließbare Öffnung des bekannten Behandlungsraums ist durch zumindest ein Rahmenteil begrenzt, und die Einfüllvorrichtung ist zur strömungsleitenden Verbindung mit einem die Betriebsflüssigkeit beinhaltenden externen Behälter, hier eine Wasserflasche, geeignet ausgebildet.

Die EP 1 655 542 und die JP 2005 155 998 A beschreiben Dampfgarer nach dem Oberbegriff des Anspruchs 1. Dabei dient jeweils als Einfüllvorrichtung eine Aufnahme für einen Wasserbehälter, der dann im Gerät verbleibt. Die Aufnahme wird während des Betriebs durch eine geschlossene Tür verdeckt.

Aus der US 6,065,171 ist eine Toplader-Waschmaschine bekannt, bei der ein Fach zum Zuführen von Waschmittel im oberen Rahmenbereich angeordnet ist. Das Fach wird durch einen geschlossenen Maschinendeckel verdeckt.

Der Erfindung stellt sich somit das Problem ein Haushaltsgerät anzugeben, bei dem ein einfaches und durch das Rahmenteil ungehindertes Befüllen über die Einfüllvorrichtung ermöglicht ist.

Erfindungsgemäß wird dieses Problem durch ein Haushaltsgerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der optisch unauffälligen Anordnung der Einfüllvorrichtung an dem Haushaltsgerät insbesondere darin, dass im Vergleich zum vorgenannten Stand der Technik die Bedienblende des Haushaltsgeräts bei dem erfindungsgemäßen Haushaltsgerät allein für dessen Bedienung, beispielsweise zur Programmauswahl oder dergleichen, verwendet werden kann. Die bis auf den Einfüllvorgang sonst nicht erforderliche Einfüllvorrichtung tritt optisch und auch in der Bedienung durch den Benutzer in den Hintergrund. Darüber hinaus ist durch die erfindungsgemäße Anordnung eine bessere und konstruktiv einfachere Trennung von stromführenden und flüssigkeitsführenden Bauteilen ermöglicht. Ferner wird die Einfüllvorrichtung und deren Öffnung während des Betriebs des Haushaltsgeräts durch die dann geschlossene Tür des Behandlungsraums automatisch überdeckt.

Es ist vorgesehen, dass die Einfüllvorrichtung einen Stutzen aufweist, der zwischen einer Ruhelage, in der der Stutzen im Wesentlichen an dem Rahmenteil anliegt und einer Einfülllage, in der der Stutzen zumindest mit dessen freien Ende von dem Rahmenteil absteht, hin und her bewegbar ist. Auf diese Weise ist ein einfaches und durch das Rahmenteil ungehindertes Befüllen über die Einfüllvorrichtung ermöglicht. Diese Ausführungsform ist besonders vorteilhaft für das Befüllen aus größeren Behältern mit Betriebsflüssigkeit.

Eine besonders vorteilhafte Weiterbildung der vorgenannten Ausführungsform sieht vor, dass der Stutzen in der Einfülllage derart an dem Rahmenteil angeordnet ist, dass der Stutzen bei dem Schließen der Tür automatisch in die Ruhelage überführbar ist. Hierdurch ist gewährleistet, dass der Stutzen auch bei unachtsamer Bedienung nicht zwischen der Tür und dem Korpus des Haushaltsgeräts eingeklemmt werden kann.

Grundsätzlich ist der Stutzen nach Art, Anordnung, Material und räumlicher Orientierung in weiten geeigneten Grenzen wählbar. Zweckmäßigerweise ist der Stutzen an dem Rahmenteil schwenkbeweglich gehalten. Alternativ hierzu wäre es beispielsweise auch möglich, dass der Stutzen in der Ruhelage in dem Inneren des Korpus angeordnet ist und bei der Überführung in dessen Einfülllage aus dem Korpus heraus bewegbar ist.

Eine vorteilhafte Weiterbildung eines schwenkbeweglich an dem Rahmenteil gehaltenen Stutzens sieht vor, dass dieser in der Einfülllage mit dem Rahmenteil einen Winkel einschließt, der kleiner als 90°, insbesondere kleiner als 45° ist. Hierdurch ist die automatische Überführung des Stutzens von der Einfülllage in die Ruhelage bei dem Schließen der Tür auf konstruktiv besonders einfache Weise realisiert.

Eine andere vorteilhafte Weiterbildung sieht vor, dass das freie Ende des Stutzens in der Einfülllage vor der Öffnung des Behandlungsraums angeordnet ist. Auf diese Weise ist es beispielsweise möglich, den Behälter mit der Betriebsflüssigkeit während des Befüllens auf der nach unten aufgeschwenkten Tür des Behandlungsraums oder auf in dem Behandlungsraum gehaltenen und aus diesem herausziehbaren Trägerblechen oder dergleichen abzustellen. Dies ist besonders bei großen und damit schweren Behältern von Vorteil.

Eine weitere vorteilhafte Weiterbildung sieht vor, dass an dem freien Ende der Einfüllvorrichtung ein die Öffnung der Einfüllvorrichtung umgebendes elastisches Pufferteil angeordnet ist. Hierdurch ist eine gedämpfte und damit materialschonende und geräuscharme Anlage der Einfüllvorrichtung an der Tür bei deren Schließung gewährleistet.

Eine andere vorteilhafte Weiterbildung sieht vor, dass die Einfüllvorrichtung durch ein Fixiermittel in der Ruhelage, der Einfülllage und jeder Zwischenlage derart fixiert ist, dass eine Lageänderung allein aufgrund der Erdanziehungskraft nicht erfolgt. Auf diese Weise ist gewährleistet, dass der Stutzen in jeder möglichen Lage sicher fixiert ist, so dass eine ungewünschte selbsttätige Bewegung des Stutzens, beispielsweise bei dem Befüllen, wirksam vermieden ist.

Ferner sieht eine weitere vorteilhafte Weiterbildung vor, dass der Überführungsbereich der Einfüllvorrichtung zwischen der Ruhelage und der Einfülllage durch jeweils einen Endanschlag begrenzt ist. Hierdurch ist sichergestellt, dass der Stutzen nur in dem gewünschten und vorher festgelegten Bereich zwischen der Ruhelage und der Einfülllage bewegt werden kann. Eine Bewegung über diese beiden Endlagen hinaus ist wirksam verhindert.

Ein Ausführungsbeispiel der Erfindung ist in den Zeichnungen rein schematisch dargestellt und wird nachfolgend näher beschrieben. Es zeigt
- Figur 1: eine perspektivische Seitenansicht eines erfindungsgemäßen Haushaltsgeräts,
- Figur 2: das Haushaltsgerät aus Fig. 1 in einer ähnlichen Ansicht in teilweiser Darstellung,
- Figur 3: eine teilweise Frontansicht des Haushaltsgeräts,
- Figur 4: eine stark vergrößerte, teilweise Darstellung des Haushaltsgeräts aus Fig. 2 in dem Bereich der Einfüllvorrichtung,
- Figur 5: eine teilweise Rückansicht des Haushaltsgeräts,
- Figur 6: der Stutzen der Einfüllvorrichtung in einer stark vergrößerten Einzeldarstellung und
- Figur 7: die Halterung des Stutzens aus Fig. 6.

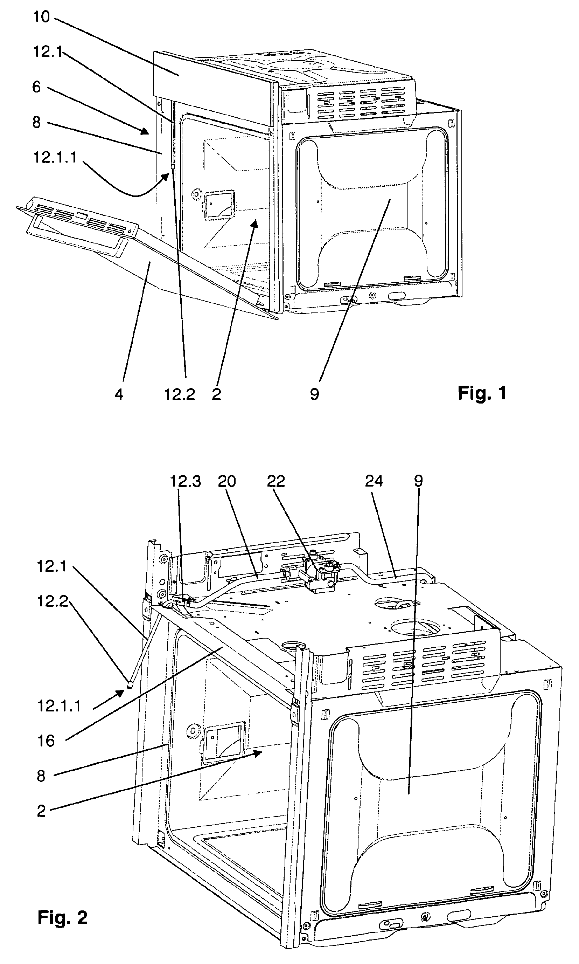

Fig. 1 zeigt ein erfindungsgemäßes Haushaltsgerät, das hier als ein Backofen ausgebildet ist. Der Backofen ist ein Kombinationsgerät, bei dem in Abhängigkeit der ausgewählten Betriebsart oder Betriebsprogramms mehrere verschiedene Beheizungsarten, wie als Ober- und Unterhitze ausgebildete Strahlungsheizer und Sattdampf eingesetzt werden. Andere dem Fachmann bekannte Beheizungsarten, wie Mikrowellenstrahlung, Kontaktheizung sowie andere Dampfformen, beispielsweise überhitzter Dampf, sind alternativ oder in Ergänzung der vorgenannten Beheizungsarten ebenfalls denkbar.

Der Backofen weist einen als Garraum ausgebildeten Behandlungsraum 2 auf, der durch eine Tür 4 verschließbar ist. Die durch die Tür 4 verschließbare Öffnung 6 des Behandlungsraums 2 ist nach oben, unten und seitlich durch ein als umlaufendes Teil ausgebildetes, einstückiges Rahmenteil 8 des Korpus 9 begrenzt. Über dem Behandlungsraum 2 ist auf an sich bekannte Weise eine Bedienblende 10 mit nicht näher dargestellten Bedien- und Anzeigeelementen angeordnet.

An dem Rahmenteil 8 ist eine Einfüllvorrichtung 12 angeordnet, von der in Fig. 1 lediglich ein Stutzen 12.1 mit einer Öffnung 12.1.1 dargestellt ist. Die Öffnung 12.1.1 ist hier in radialer Richtung von einem als Gummiteil ausgebildeten elastischen Pufferteil 12.2 umgeben, das auf den Stutzen 12.1 aufgesteckt ist. Der Stutzen 12.1 ist hier in der Ruhelage dargestellt. Auch bei geöffneter Tür 4 bleibt der Stutzen 12.1 hier, wie dargestellt, in der Ruhelage. Ausgehend von der Ruhelage kann der Stutzen 12.1 von dem Benutzer manuell in die in Fig. 2 dargestellte Einfülllage überführt werden. Die Ruhelage und die Einfülllage begrenzen den Überführungsbereich des Stutzens 12.1, wobei der Stutzen 12.1 in der Ruhelage über das elastische Pufferteil 12.2 an dem Rahmenteil 8 anliegt. Eine Bewegung in Richtung Einfülllage ist hier durch ein Blechteil 16 begrenzt. Rahmenteil 8 und Blechteil 16 bilden hier somit jeweils einen Endanschlag für den Stutzen 12.1. Alternativ zu der vorliegenden Ausführungsform ist es jedoch auch denkbar, dass der Stutzen 12.1 bei der Öffnung der Tür 4 automatisch von der Ruhelage in die Einfülllage überführt wird. In einer konstruktiv besonders einfachen Ausführungsform wäre dies durch eine vorgespannte Feder möglich. In einer aufwendigeren Lösung wäre beispielsweise der Einsatz eines Stellmotors denkbar. Dies hätte den Vorteil, dass die Überführung des Stutzens 12.1 nicht bei jedem Öffnen der Tür 4 erfolgen würde, sondern nur bei Bedarf. Hierfür würde der Stellmotor in Abhängigkeit der Betriebsart oder des Betriebsprogramms automatisch von einer elektrischen Steuerung angesteuert.

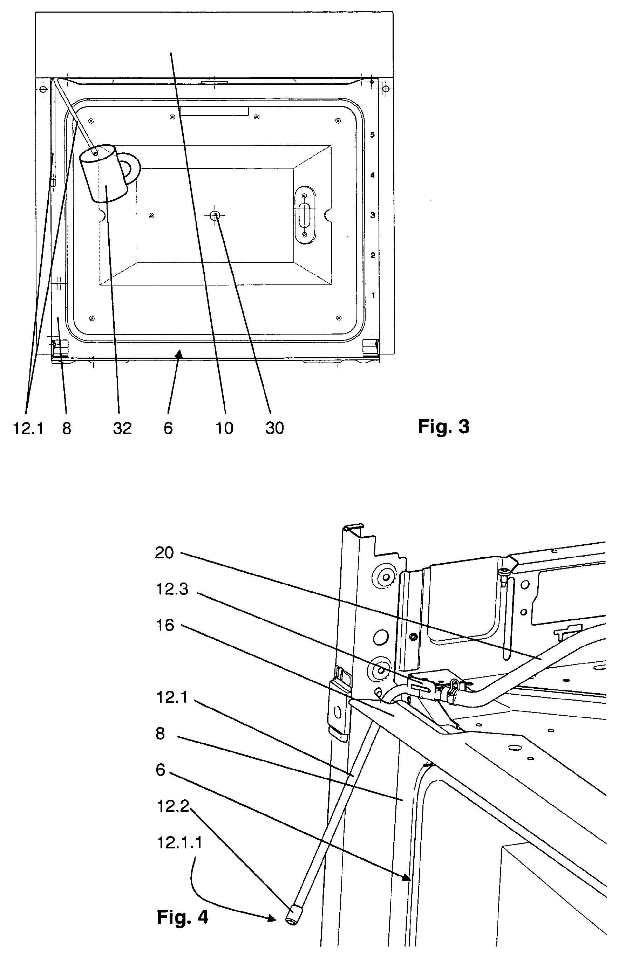

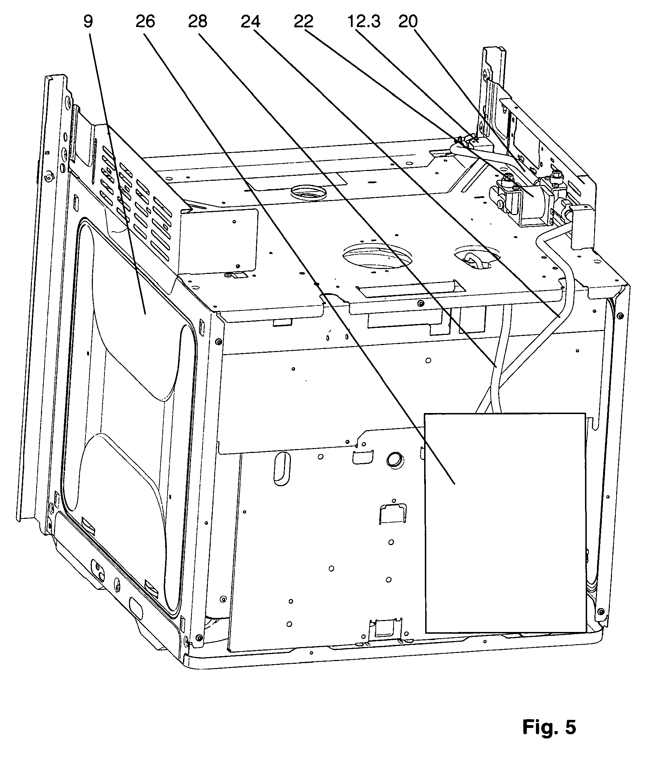

Wie aus Fig. 2 ferner hervorgeht, ist der Stutzen 12.1 über eine in den Fig. 4, 6 und 7 näher dargestellten Halterung 12.3 an dem Korpus 9 schwenkbeweglich befestigt. An den Stutzen 12.1 ist, im Wesentlichen flüssigkeitsdicht, eine Saugleitung 20, eine Pumpe 22 und eine Druckleitung 24 angeschlossen. Die Saugleitung 20 ist auf dem Fachmann bekannte Weise derart mit dem Stutzen 12.1 lösbar verbunden, dass das Verschwenken des Stutzens 12.1 in der Halterung 12.3 ermöglicht ist. Die Druckleitung 24 ist ferner an den in Fig. 5 dargestellten Dampferzeuger 26 angeschlossen. In dem Dampferzeuger 26 wird aus der hier über die Öffnung 12.1.1 des Stutzens 12.1 in den Backofen eingespeisten Betriebsflüssigkeit, nämlich Wasser, Sattdampf erzeugt, der dann über eine Dampfleitung 28 und eine in Fig. 3 dargestellte Dampföffnung 30 bei Bedarf in den Garraum 2 eingespeist wird.

Hat der Benutzer eine Betriebsart oder ein Programm über die Bedienblende 10 ausgewählt, bei dem eine vorher festgelegte Menge an Dampf und damit Wasser benötigt wird, wird der Benutzer über das nicht näher dargestellte Anzeigeelement der Bedienblende 10 aufgefordert, die Tür 4 zu öffnen und einen mit Wasser gefüllten Behälter 32, hier ein Becher, derart an den Stutzen 12.1 zu halten, dass sich die Öffnung 12.1.1 des Stutzens 12.1 unterhalb des Wasserspiegels befindet. Der Benutzer schwenkt den Stutzen 12.1 hierzu von der in Fig. 1 dargestellten Ruhelage in die in Fig. 2 und 3 dargestellte Einfülllage und platziert den Behälter 32 entsprechend. Durch die Betätigung eines ebenfalls nicht näher dargestellten Bedienelements der Bedienblende 10, beispielsweise einen Tastendruck, löst der Benutzer den Einfüllvorgang, also das Befüllen, aus. Die Pumpe 22 saugt über die Saugleitung 20 und den Stutzen 12.1 das Wasser aus dem Behälter 32 an und fördert es über die Druckleitung 24 in den Dampferzeuger 26. Der Benutzer wird über die Anzeige darüber informiert, dass der Einfüllvorgang beendet ist. Die Pumpe 22 ist ausgeschaltet und der Benutzer kann die strömungsleitende Verbindung zwischen dem Behälter 32 und dem Stutzen 12.1 wieder lösen, also den Behälter 32 in der Bildebene von Fig. 3 nach unten von dem Stutzen 12.1 distanzieren. Wie aus Fig. 3 deutlich hervorgeht, ist das Annähern sowie das Entfernen des Behälters 32 hier dadurch erleichtert, dass der Stutzen 12.1 bei der Überführung in die Einfülllage nicht nur nach vorne aus der Bildebene von Fig. 3 heraus, sondern auch nach rechts in Richtung der Mitte der Öffnung 6 verschwenkt wird. Der Stutzen 12.1 befindet sich somit in der Einfülllage vor der Öffnung 6. Zur besseren Verständlichkeit sind in Fig. 3 sowohl die Ruhelage wie auch die Einfülllage des Stutzens 12.1 dargestellt.

Nach dem oben erläuterten Befüllen kann der Benutzer den Stutzen 12.1 wieder von der Einfülllage zurück in die Ruhelage schwenken. Alternativ hierzu wäre es auch denkbar, dass diese Rücküberführung nach Beendigung des Befüllvorgangs mittels eines Stellmotors analog zu dem automatischen Überführen in die Einfülllage auch automatisch erfolgt. Bei dem vorliegenden Ausführungsbeispiel ist dies jedoch nicht zwingend erforderlich. Wie aus den Fig. 2 bis 4 hervorgeht, schließt der Stutzen 12.1 in der Einfülllage mit dem Rahmenteil 8 bezogen auf eine Ebene parallel zu den Seiten des Haushaltsgeräts einen Winkel von hier 40° und bezogen auf eine Ebene parallel zu der Frontseite des Haushaltsgeräts einen Winkel von hier 30° ein. Auf diese Weise ist gewährleistet, dass der Stutzen 12.1 bei dem Schließen der Tür 4 automatisch von der Einfülllage in die Ruhelage überführt wird. Alternativ zu den hier vorliegenden Winkeln ist es für diese Funktion grundsätzlich ausreichend, wenn der Winkel bezogen auf eine Ebene parallel zu den Seiten des Haushaltsgeräts kleiner als 90° realisiert ist. Ferner ist es nicht zwingend erforderlich, dass der Stutzen 12.1 bei der Überführung in die Einfülllage auch in Richtung der Mitte der Öffnung 6 bewegt wird. Grundsätzlich ist bei der gewählten Anordnung des Stutzens 12.1 eine Bewegung in Richtung senkrecht zur Bildebene von Fig. 3 ausreichend.

In Fig. 4 ist der Bereich der Einfüllvorrichtung 12, also Stutzen 12.1 mit elastischem Pufferteil 12.2 und Halterung 12.3, stark vergrößert und analog zu Fig. 2 dargestellt.

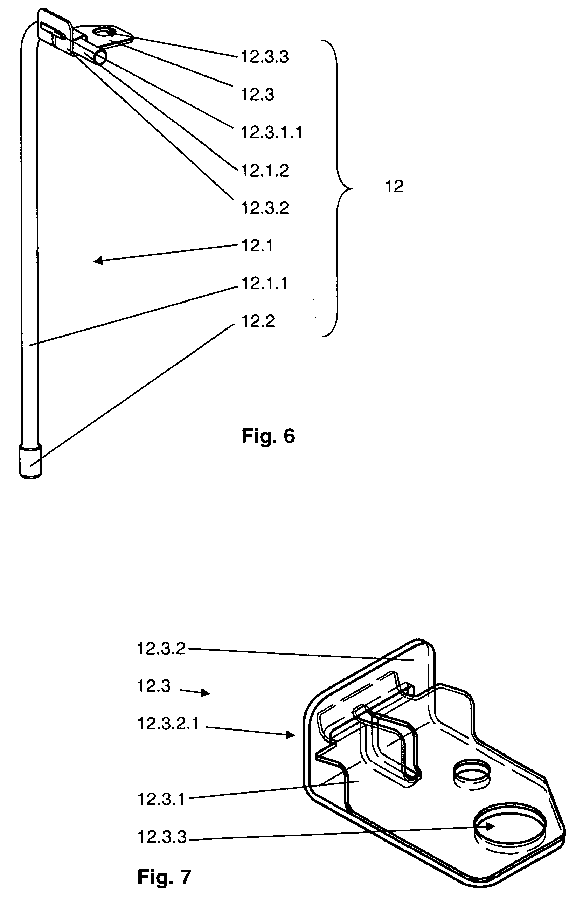

Der Stutzen 12.1 mit dem aufgesteckten Pufferteil 12.2 und die Halterung 12.3 sind darüber hinaus in den Fig. 6 und 7 separat dargestellt. Der Stutzen 12.1 ist hier als ein Edelstahlteil ausgebildet, während das elastische Pufferteil 12.2 als ein Gummiteil, also ein Kunststoffteil mit einer geringen Festigkeit und hoher Elastizität ausgebildet. Das Pufferteil 12.2 ist hier mit dem freien Ende des Stutzens 12.1 verklebt. Andere dem Fachmann bekannte und geeignete Fügeverfahren sind ebenfalls möglich. Alternativ dazu wäre es jedoch auch denkbar, dass der Stutzen 12.1 beispielsweise als ein Kunststoffteil höherer Festigkeit und/oder das elastische Pufferteil als eine an dem freien Ende des Stutzens 12.1 aufgebrachte Dickschichtbeschichtung, beispielsweise aus PTFE oder dergleichen, ausgebildet ist.

Die Halterung 12.3 ist hier zweiteilig ausgebildet und weist ein Oberteil 12.3.1 und ein Unterteil 12.3.2 auf. Beide Teile 12.3.1 und 12.3.2 sind aus Federstahl hergestellt, ineinander über eine Lasche 12.3.1.1 und eine Öffnung 12.3.2.1 verhakt. Über eine nicht dargestellte Schraube, die in die Öffnung 12.3.3 eingreift, ist die Halterung 12.3 lösbar an dem Korpus 9 befestigt. Der Stutzen 12.1, der einen langen Abschnitt 12.1.1 und einem dazu im rechten Winkel angeordneten kurzen Abschnitt 12.1.2 aufweist, ist über den kurzen Abschnitt 12.1.2 an der Halterung 12.3 schwenkbeweglich gehalten. Hierzu ist der kurze Abschnitt 12.1.2 zwischen dem Ober- 12.3.1 und dem Unterteil 12.3.2 eingeklemmt, so dass der Stutzen 12.1 in jeder möglichen Lage über an den Kontaktflächen von kurzem Abschnitt 12.1.2 und Halterung 12.3 wirkenden Reibungskräften fixiert. Alternativ hierzu sind jedoch auch andere dem Fachmann bekannte und geeignete Verbindungstechniken denkbar.

Die erfindungsgemäße Lösung ist nicht auf das erläuterte Ausführungsbeispiel begrenzt, sondern auch auf andere Haushaltsgeräte, in denen Betriebsflüssigkeiten zum Einsatz kommen, anwendbar. Beispielsweise wäre ein Einsatz in Getränkebereitern, in anderen Gargeräten, wie Dampfgarer, Herde oder dergleichen, in Wäschebehandlungsmaschinen, in Geschirrspülmaschinen und Kühlmöbeln denkbar.

So unterschiedlich wie die Haushaltsgeräte können auch die verwendeten Betriebsflüssigkeiten oder -pulver sein. Neben Wasser sind auch andere Betriebsflüssigkeiten oder -pulver, wie beispielsweise Reinigungsmittel, Milch oder dergleichen möglich. Angepasst an die jeweilige Betriebsflüssigkeit oder das Betriebspulver ist, sofern vorgesehen, die Behandlung der Betriebsflüssigkeit oder des -pulvers. Neben einer Erhitzung, einer Verdampfung und einer Überhitzung des Dampfes sind beispielsweise auch eine Lösung eines Betriebspulvers in oder die Mischung einer Betriebsflüssigkeit mit einer anderen möglich.

Der Stutzen kann in einer nicht zur Erfindung gehörenden Ausführungsform auch an der bezogen auf die Bildebene von Fig. 3 rechten Seite, oberhalb oder unterhalb der Öffnung an dem Rahmenteil angeordnet sein. Auch muss das Rahmenteil nicht umlaufend ausgebildet sein. Anstelle des Stutzens kann die Einfüllvorrichtung lediglich eine Öffnung in dem Rahmenteil aufweisen. Bei dieser Ausführungsform ist es jedoch erforderlich, entweder spezielle Behälter mit Ausgießhilfen oder einen zusätzlichen Aufstecktrichter oder dergleichen zu verwenden. Auch ist es möglich, dass der Stutzen, flexibel oder im Wesentlichen steif ausgebildet, in den Korpus einsteckbar ausgebildet ist. Hierdurch würde der Stutzen in der Ruhelage bis auf eine Handhabe oder dergleichen fast vollständig in dem Korpus aufgenommen sein und würde zur Überführung in die Einfülllage aus dem Korpus herausgezogen werden.

## Patentansprüche

1. Haushaltsgerät mit einem durch eine Tür (4) verschließbaren Behandlungsraum (2) und mit einer Einfüllvorrichtung (12) zum Einfüllen einer Betriebsflüssigkeit oder eines Betriebspulvers, die oder das in einer Betriebsart des Haushaltsgeräts, behandelt oder unbehandelt, in den Behandlungsraum (2) einleitbar ist, wobei die durch die Tür (4) verschließbare Öffnung (6) des Behandlungsraums (2) durch zumindest ein Rahmenteil (8) begrenzt ist, wobei die Einfüllvorrichtung (12) zur strömungsleitenden Verbindung mit einem die Betriebsflüssigkeit oder das Betriebspulver beinhaltenden externen Behälter (32) geeignet ausgebildet ist, und wobei die Einfüllvorrichtung (12) an dem Rahmenteil (8) angeordnet ist, wobei deren Öffnung (12.1.1) zum Einfüllen der Betriebsflüssigkeit oder des Betriebspulvers zumindest bei vollständig geöffneter Tür (4) zugänglich ist und bei geschlossener Tür (4) durch diese überdeckt ist,
**dadurch gekennzeichnet,**
**dass** die Einfüllvorrichtung (12) einen Stutzen (12.1) aufweist, der zwischen einer Ruhelage, in der der Stutzen (12.1) im Wesentlichen an dem Rahmenteil (8) anliegt und einer Einfülllage, in der der Stutzen (12.1) zumindest mit dessen freien Ende von dem Rahmenteil (8) absteht, hin und her bewegbar ist.

2. Haushaltsgerät nach Anspruch 1,
**dadurch gekennzeichnet,**
**dass** der Stutzen (12.1) in der Einfülllage derart an dem Rahmenteil (8) angeordnet ist, dass der Stutzen (12.1) bei dem Schließen der Tür (4) automatisch in die Ruhelage überführbar ist.

3. Haushaltsgerät nach Anspruch 1 oder 2,
**dadurch gekennzeichnet,**
**dass** der Stutzen (12.1) an dem Rahmenteil (8) schwenkbeweglich gehalten ist.

4. Haushaltsgerät nach Anspruch 3,
**dadurch gekennzeichnet,**
**dass** der Stutzen (12.1) in der Einfülllage mit dem Rahmenteil (8) einen Winkel einschließt, der kleiner als 90°, insbesondere kleiner als 45°, ist.

5. Haushaltsgerät nach mindestens einem der Ansprüche 1 bis 4,
**dadurch gekennzeichnet,**
**dass** das freie Ende des Stutzens (12.1) in der Einfülllage vor der Öffnung (6) des Behandlungsraums (2) angeordnet ist.

6. Haushaltsgerät nach mindestens einem der Ansprüche 1 bis 5,
**dadurch gekennzeichnet,**
**dass** an dem freien Ende der Einfüllvorrichtung (12) ein die Öffnung (12.1.1) der Einfüllvorrichtung (12) umgebendes elastisches Pufferteil (12.2) angeordnet ist.

7. Haushaltsgerät nach mindestens einem der Ansprüche 1 bis 6,
**dadurch gekennzeichnet,**
**dass** die Einfüllvorrichtung (12) durch ein Fixiermittel (12.3) in der Ruhelage, der Einfülllage und jeder Zwischenlage derart fixiert ist, dass eine Lageänderung allein aufgrund der Erdanziehungskraft nicht erfolgt.

8. Haushaltsgerät nach mindestens einem der Ansprüche 1 bis 7,
**dadurch gekennzeichnet,**
**dass** der Überführungsbereich der Einfüllvorrichtung (12) zwischen der Ruhelage und der Einfülllage durch jeweils einen Endanschlag (8, 16) begrenzt ist.

## Claims

1. Domestic appliance comprising a processing chamber (2) that can be closed by a door (4), and comprising a filling device (12) to be filled with an operating liquid or an operating powder, which can be fed, in the treated or untreated state, into the processing chamber (2) in an operating mode of the domestic appliance, the opening (6) in the processing chamber (2) which can be closed by the door (4) being delimited by at least one frame part (8), the filling device (12) being suitably designed to be connected in a flow-conducting manner to an external container (32) containing the operating liquid or operating powder, and the filling device (12) being arranged on the frame part (8), the opening (12.1.1) therein for filling said chamber with the operating liquid or operating powder being accessible at least when the door (4) is completely open and being covered by the door (4) when it is closed,
**characterised in that**
the filling device (12) comprises a connecting piece (12.1) which can be moved back and forth between a rest position in which the connecting piece (12.1) substantially rests on the frame part (8) and a filling position in which at least the free end of the connecting piece (12.1) projects from the frame part (8).

2. Domestic appliance according to claim 1,
**characterised in that**,
in the filling position, the connecting piece (12.1) is arranged on the frame part (8) such that the connecting piece (12.1) can be automatically transferred into the rest position when the door (4) is closed.

3. Domestic appliance according to either claim 1 or claim 2,
**characterised in that**
the connecting piece (12.1) is pivotally mounted on the frame part (8).

4. Domestic appliance according to claim 3,
**characterised in that**,
in the filling position, the connecting piece (12.1) encloses an angle with the frame part (8) that is less than 90°, in particular less than 45°.

5. Domestic appliance according to at least one of claims 1 to 4,
**characterised in that**,
in the filling position, the free end of the connecting piece (12.1) is arranged in front of the opening (6) in the processing chamber (2).

6. Domestic appliance according to at least one of claims 1 to 5,
**characterised in that**
a resilient buffer part (12.2) that surrounds the opening (12.1.1) in the filling device (12) is arranged at the free end of the filling device (12).

7. Domestic appliance according to at least one of claims 1 to 6,
**characterised in that**
the filling device (12) is secured in the rest position, the filling position and any intermediate position by a securing means (12.3) such that its position cannot change due to gravitational force alone.

8. Domestic appliance according to at least one of claims 1 to 7,
**characterised in that**
the transfer range of the filling device (12) between the rest position and the filling position is limited by an end stop (8, 16) in each case.

## Revendications

1. Appareil électroménager avec un espace de traitement (2) pouvant être fermé par une porte (4) et avec un dispositif de remplissage (12) pour le versement d'un liquide de service ou d'une poudre de service qui, dans un mode de fonctionnement de l'appareil électroménager, peut être introduit(e), à l'état traité ou non traité, dans l'espace de traitement (2), dans lequel l'ouverture (6) de l'espace de traitement (2) pouvant être fermée par la porte (4) est limitée par au moins une partie de cadre (8), le dispositif de remplissage (12) étant configuré de façon appropriée pour la liaison de conduite d'écoulement avec un réservoir (32) externe contenant le liquide de service ou la poudre de service, et dans lequel le dispositif de remplissage (12) est disposé sur la partie de cadre (8), dans lequel l'ouverture (12.1.1) de ce dispositif est accessible, au moins quand la porte (4) est complètement ouverte, pour le versement du liquide de service ou de la poudre de service, et cette ouverture est recouverte par la porte (4) quand cette dernière est fermée,
**caractérisé en ce que**
le dispositif de remplissage (12) présente une tubulure (12.1) qui peut être déplacée dans un mouvement de va-et-vient entre une position de repos dans laquelle la tubulure (12.1) est essentiellement plaquée contre la partie de cadre (8) et une position de remplissage dans laquelle la tubulure (12.1) se détache de la partie de cadre (8) au moins par son extrémité libre.

2. Appareil électroménager selon la revendication 1,
**caractérisé en ce que**,
dans la position de remplissage, la tubulure (12.1) est disposée sur la partie de cadre (8) de telle sorte que, lors de la fermeture de la porte (4), la tubulure (12.1) peut être transférée automatiquement dans la position de repos.

3. Appareil électroménager selon la revendication 1 ou 2,
**caractérisé en ce que**
la tubulure (12.1) est retenue de façon mobile en pivotement sur la partie de cadre (8).

4. Appareil électroménager selon la revendication 3,
**caractérisé en ce que**,
dans la position de remplissage, la tubulure (12.1) forme avec la partie de cadre (8) un angle qui est inférieur à 90°, en particulier inférieur à 45°.

5. Appareil électroménager selon au moins une des revendications 1 à 4,
**caractérisé en ce que**,
dans la position de remplissage, l'extrémité libre de la tubulure (12.1) est disposée devant l'ouverture (6) de l'espace de traitement (2).

6. Appareil électroménager selon au moins une des revendications 1 à 5,
**caractérisé en ce**
**qu'**une partie tampon (12.2) élastique entourant l'ouverture (12.1.1) du dispositif de remplissage (12) est disposée sur l'extrémité libre du dispositif de remplissage (12).

7. Appareil électroménager selon au moins une des revendications 1 à 6,
**caractérisé en ce que**
le dispositif de remplissage (12) est fixé par un moyen de fixation (12.3) dans la position de repos, dans la position de remplissage ou dans toute position intermédiaire de telle sorte qu'un changement de position ne survient pas sous le simple effet de la force de la gravité.

8. Appareil électroménager selon au moins une des revendications 1 à 7,
**caractérisé en ce que**
la zone de transfert du dispositif de remplissage (12) entre la position de repos et la position de remplissage est limitée respectivement par une butée de fin de course (8, 16).
